# EUROPEAN PATENT APPLICATION

(11) **EP 2 767 801 A1**
(43) Date of publication of application: **20.08.2014**
(21) Application number: 12839864.1
(22) Date of filing: 01.10.2012
(51) Int. Cl.: G01C 21/26, B60R 16/02, G09B 29/00

(54) **NAVIGATION DEVICE**

(30) Priority: 14.10.2011 JP 2011226888
(71) Applicant: Hitachi, Ltd., Tokyo 100-8280 (JP)
(72) Inventor: MATSUO Shigeru, Tokyo 100-8280 (JP); NAKAHARA Takashi, Tokyo 100-8280 (JP)
(74) Representative: MERH-IP Matias Erny Reichl Hoffmann
(86) International application number: PCT/JP2012/075296
(87) International publication number: WO 2013/054667

(57) **Abstract**

The present invention enables to move an enlarged map displayed as a slave screen within a large-area map screen freely and at high speed. A navigation device includes: a map display means for displaying a large-area map screen showing a large-area map and displaying an enlarged map screen showing a partial enlarged map obtained by enlarging a partial region of the large-area map in superposition on the large-area map screen at a display position of the partial region; a speed calculation means for calculating a speed pertaining to movement of the enlarged map screen; an enlarged map creation means for creating an enlarged map obtained by enlarging a predetermined region including the partial region of the large-area map based on vector data of a detailed map obtained by enlarging the large-area map; and a selection means for selecting the partial region of the large-area map as the partial enlarged map when the speed pertaining to the movement is no lower than a reference speed and selecting a region of the enlarged map, corresponding to the partial region, as the partial enlarged map when the speed pertaining to the movement is lower than the reference speed.

## Description

### TECHNICAL FIELD

The present invention relates to a navigation device that can display a detailed screen on a portion of a large-area map screen and move the detailed screen arbitrarily thereon.

### BACKGROUND ART

A device is known which displays a slave screen at a display position in a display screen for displaying a large-area map and displays an enlarged detailed map of the display position in the slave screen (cf., for example, Patent Literature 1). With this device, the slave screen can be moved within the display screen.

### CITATION LIST

### PATENT LITERATURE

Patent Literature 1: Japanese Laid Open Patent Publication No. 2007-72233 A

### SUMMARY OF INVENTION

### TECHNICAL PROBLEM

With the device that is described in the above described Patent Literature 1, attempting to move the position of display of the slave screen so as to follow the movement of a finger that touches the slave screen, while the slave screen is moving, the content of display of the enlarged map on the slave screen is not updated and as a result the enlarged map cannot be checked while it is moving. Therefore, when the slave screen is to be moved in order to find out a target object on the map, a series of operations must be done repeatedly. That is, after the movement, the slave screen is stopped for checking the content of the display. If the target object is not displayed yet, the position of the slave screen is further moved and stopped for awaiting update of the slave screen and checking the content thereof again. Therefore, the slave screen cannot be moved smoothly to a target destination.

### SOLUTION TO PROBLEM

A navigation device according to the claim 1 characterized by comprising: a map display means for displaying a large-area map screen showing a large-area map and displaying an enlarged map screen showing a partial enlarged map obtained by enlarging a partial region of the large-area map in superposition on the large-area map screen at a display position of the partial region; a speed calculation means for calculating a speed pertaining to movement of the enlarged map screen; an enlarged map creation means for creating an enlarged map obtained by enlarging a predetermined region including the partial region of the large-area map based on vector data of a detailed map obtained by enlarging the large-area map; and a selection means for selecting the partial region of the large-area map as the partial enlarged map when the speed pertaining to the movement is no lower than a reference speed and selecting a region of the enlarged map, corresponding to the partial region, as the partial enlarged map when the speed pertaining to the movement is lower than the reference speed.

### ADVANTAGEOUS EFFECT OF THE INVENTION

According to the present invention, while the slave screen is moving at a speed higher than a predetermined speed, an image of the large-area map is displayed in enlarged scales, so that the slave screen can be moved while checking the range of the enlarged map displayed on the slave screen. Enlargement processing for enlarging the image of the large-area map can be performed at a speed higher than vector map creation processing. This enables high speed movement of the slave screen. When the slave screen approaches to the target place and its moving speed becomes slower than a predetermined value, an image that is created according to a vector map method that enables display of detailed information is displayed. As a result, it becomes possible to check the target objects. This method makes it possible to move the display position of the slave screen to a desired target place smoothly.

### BRIEF DESCRIPTION OF THE DRAWINGS

[FIG. 1] FIG. 1 is a diagram showing a functional construction of a navigation device according to an embodiment of the present invention.
[FIG. 2] FIG. 2 is a diagram showing an example of display during the movement of a slave screen.
[FIG. 3] FIG. 3 is a diagram illustrating a region that is displayed neither in a large-area map screen nor in a slave screen as a result of display of the slave screen.
[FIG. 4] FIG. 4 is a diagram showing an example of display when the display of the slave screen is started.
[FIG. 5] FIG. 5 is a block diagram showing details of an enlarged map display function.
[FIG. 6] FIG. 6 is a flow diagram illustrating a process of displaying an enlarged map.
[FIG. 7] FIG. 7 is a flow diagram illustrating a process of obtaining a threshold value for judging movement speed of a slave screen.
[FIG. 8] FIG. 8 is a functional block diagram according to a variation example for changing the shape of the slave screen into a desired shape.
[FIG. 9] FIG. 9 is a flow diagram illustrating a process of changing the form of the slave screen into a desired shape according to the variation example.
[FIG. 10] FIG. 10 is a functional configuration diagram illustrating a variation example in which the slave screen is displayed when scrolling the large-area map.
[FIG. 11] FIG. 11 is a flow diagram illustrating a processing according to a variation example in which the slave screen is displayed when scrolling the large-area map.

### DESCRIPTION OF EMBODIMENTS

Hereafter, referring to the drawings, a navigation device according to an embodiment of the present invention is explained.

Screens of conventional navigation devices have smaller display areas than those of paper maps and does not fit to display a detailed wide-range map well. Thus, there has been conventionally adopted a display method in which the display screen is divided into two, one displaying a large-area map and another displaying a detailed map, and displaying them at the same time. However, with this method, it is difficult to intuitively understand the relationship between the detailed map and the large-area map. It is also difficult to freely alter the size of the display area of each map. Therefore, according to the present invention, there is adopted a method in which a detailed map is displayed as a slave screen provided in a display screen for displaying a large-area map and the slave screen is configured to be movable to a desired position in the large-area map display screen freely and at high speed. The navigation device can alter the display position of the slave screen following a high speed movement of the finger that is detected by a touch panel or the like attached to the display screen. This configuration enables one to intuitively understand the positional relationship between the large-area map screen and the detailed screen and in addition, enables the position of the slave screen to be moved freely at high speed. As a result the display of the large-area map and the detailed map can be altered at a desired point. Here, a large-area map means a map that is displayed on a display screen of the navigation device, with the map having a scale larger than the scale of the detailed map that is displayed on the slave screen within the display screen of the navigation device.

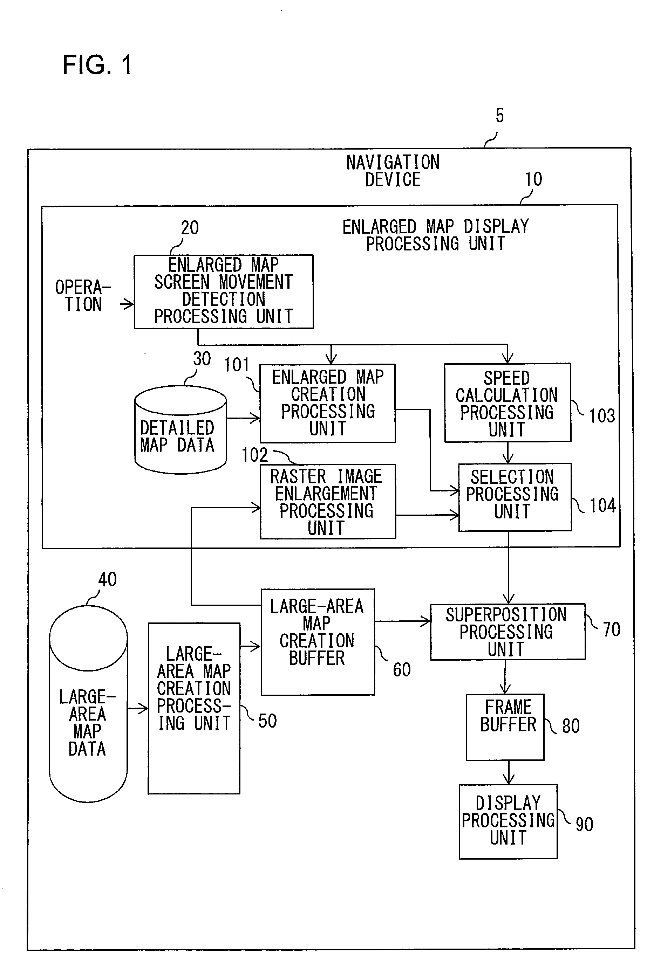

FIG. 1 presents a functional configuration diagram illustrating a navigation device for implementing the present invention. A navigation device 5 is provided with a large-area map display screen (large-area map screen) for showing a large-area map and, as a slave screen, an enlarged map screen that displays a detailed partial enlarged map showing a partial region among the large-area map. The slave screen can be moved within the display screen for a large-area map (large-area map screen) freely. The navigation device has the following construction. As the construction for displaying a large-area map, the navigation device 5 includes large-area map data 40 expressed in the form of vector data, a large-area map creation processing unit 50 that creates a map using the data, a large-area map creation buffer 60 that stores a result of creation by the large-area map creation processing unit 50 in raster data format, a superposition processing unit 70 that synthesizes displays of a large-area map and a detailed map, a frame buffer 80 that stores a result of synthesis by the superposition processing unit 70, and a display processing unit 90 that displays a large-area map screen 95 and a slave screen 97,which will be explained later, based on the data in the frame buffer 80.

When displaying a slave screen, if the slave screen moves at high speed, vector creation processing by an enlarged map creation processing unit 101 could not proceed in time with the movement of the slave screen. Accordingly, according to the present invention, when the slave screen moves at a speed higher than a predetermined speed, a raster map created in the large-area map creation buffer 60 is magnified and displayed, thereby making it possible for the slave screen to follow up the movement of the finger. For this purpose, the enlarged map display processing unit 10 includes an enlarged map screen movement detection processing unit 20 that detects the movement of an enlarged map by an operation sensed by a sensor such as a touch panel, an enlarged map creation processing unit 101 that creates an enlarged map using detailed map data 30 containing vector data based on the result of the detection, a raster image enlargement processing unit 102 that enlarges a partial raster image in the large-area map creation buffer 60, a speed calculation processing unit 103 that calculates the moving speed of the slave screen upon movement of the slave screen detected by the enlarged map screen movement detection processing unit 20, and a selection processing unit 104 that selects either one of the detailed map created by the enlarged map creation processing unit 101 and the map that is enlarged by the raster image enlargement processing unit 102 on the basis of the result from the speed calculation processing unit 103.

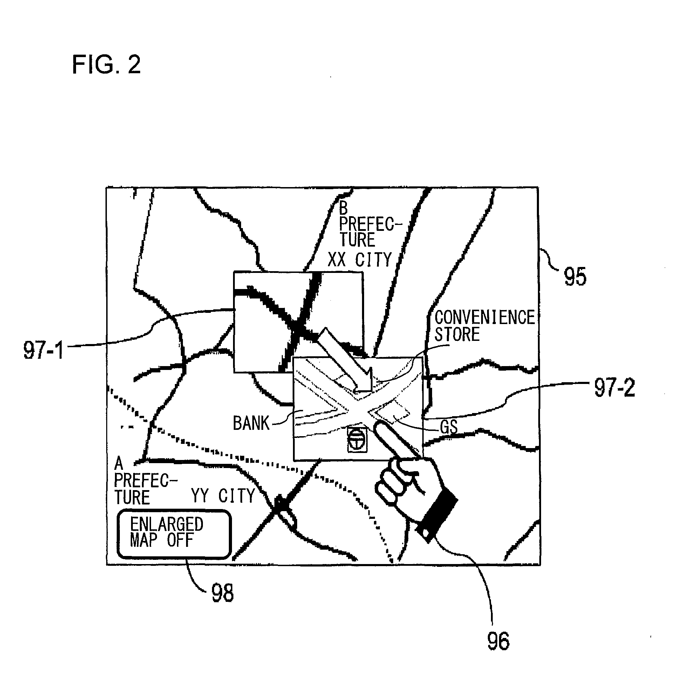

FIG. 2 shows an exemplary display of the slave screen (i.e., enlarged map screen) 97 that is displayed in superposition on the large-area map screen 95 at a display position of a partial region in the large-area map screen 95 that displays a large-area map. When the user moves his or her finger 96 touching the slave screen 97 and thus alters the touch position of the finger 96 in the large-area map screen 95, the slave screen 97 is moved following the movement of the finger 96. The enlarged map screen movement detection processing unit 20 detects the movement of the slave screen 97. An enlarged figure of the raster image in the large-area map creation buffer 60 is displayed on a slave screen 97-1 that is moving at high speed. Thereafter, on a slave screen 97-2 whose moving speed becomes slower, a detailed map created by the enlarged map creation processing unit 101 is displayed.

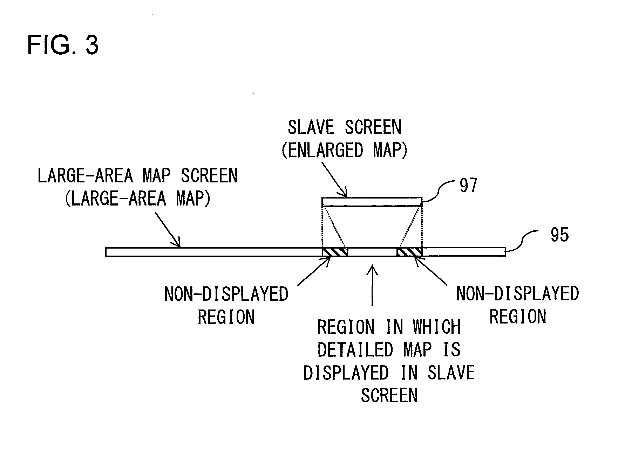

When a slave screen is displayed on the large-area map screen, there occurs a region that is displayed neither on the slave screen nor on the large-area map screen. FIG. 3 presents a diagram that illustrates that a part of the large-area map screen 95 is not displayed. The screen is seen in a direction perpendicular to the cross-section. Although actually, the slave screen 97 is not lifted up from the large-area map screen, the slave screen 97 is illustrated so, in order to emphasize the part that is not displayed. The part that is not displayed occurs because the scale size of the slave screen is of detailed size rather than that of the large-area map screen so that there is created a difference between a region that can be displayed by the slave screen 97 and a large-area map region that is shown by the large-area map screen 95 that is displayed behind the slave screen. When the level of detail in the slave screen 97 is increased (i.e., when the difference between scale sizes of the large-area map and the detailed map becomes greater), the region that is not displayed increases. As a result, a periphery of the destination to which the slave screen moves becomes out of sight and it becomes difficult to set a target for the destination for which the slave screen moves. Accordingly, in order to enable one to find out the target position of the movement of the slave screen 97 quickly, in the present invention, the enlarged map of raster image in the large-area map creation buffer 60 is switched to a map created using vector data of the detailed map data 30 before the moving speed of the slave screen 97 is slowed down to a speed that is no faster than a predetermined speed and the movement of the slave screen 97 is stopped. With this configuration, when it is necessary to move the slave screen 97 at high speed, an image of the large-area map that is enlarged by raster image enlargement processing is displayed to clearly show the display range of the enlarged map. When the moving speed of the slave screen 97 is slowed down, detailed information is displayed on the slave screen 97 so as to make one easier to find the target of destination of movement of the slave screen 97.

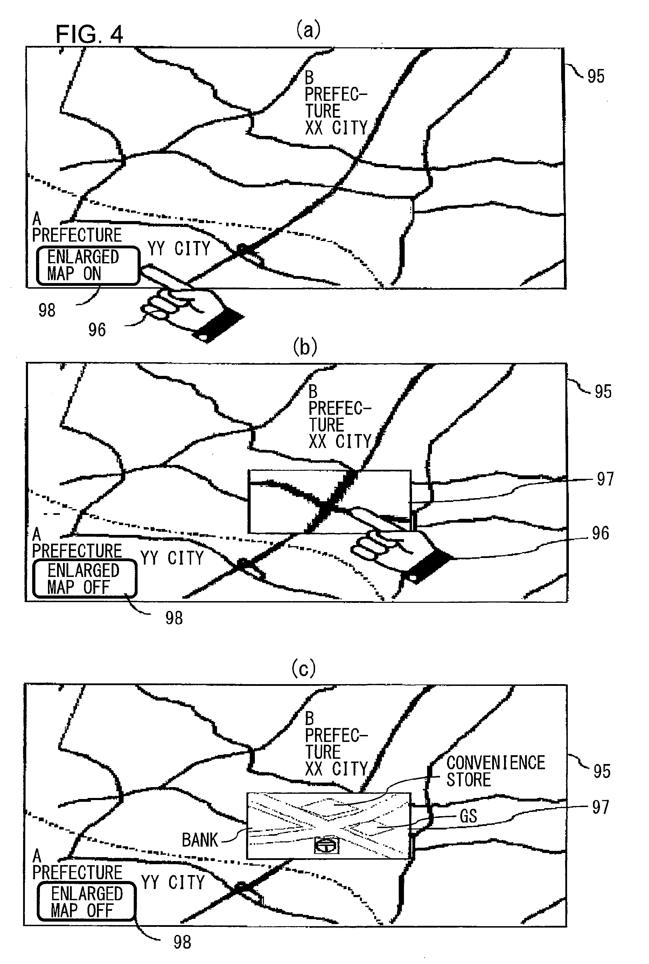

FIG. 4 illustrates an operation example when the display of an enlarged map is started. Before the enlarged map is displayed, the display of an operation button 98 on the screen is "ENLARGED MAP ON" as shown in FIG. 4(a). This is touched by the finger 96. Then, a place of which it is desired to display an enlarged map is touched. As a result the slave screen 97 for that place is displayed in that place and the display of the operation button 98 is altered to "ENLARGED MAP OFF" as shown in FIG. 4(b). At this moment, the enlarged map creation processing unit 101 starts creation of an enlarged map. If it is expected that it takes a relatively long time before creation of the enlarged map is completed, the image of that place of the enlarged map in the large-area map creation buffer 60 is enlarged and displayed by the raster image enlargement processing unit 102. Thereafter, upon completion of the creation by the enlarged map creation processing unit 101, the display is switched to the created image as shown in FIG. 4(c). This shortens the time taken from the start of the operation to the display of the enlarged map, thus increasing the handleability. "ENLARGED MAP OFF" is touched by the finger in order to stop the display of the slave screen 97.

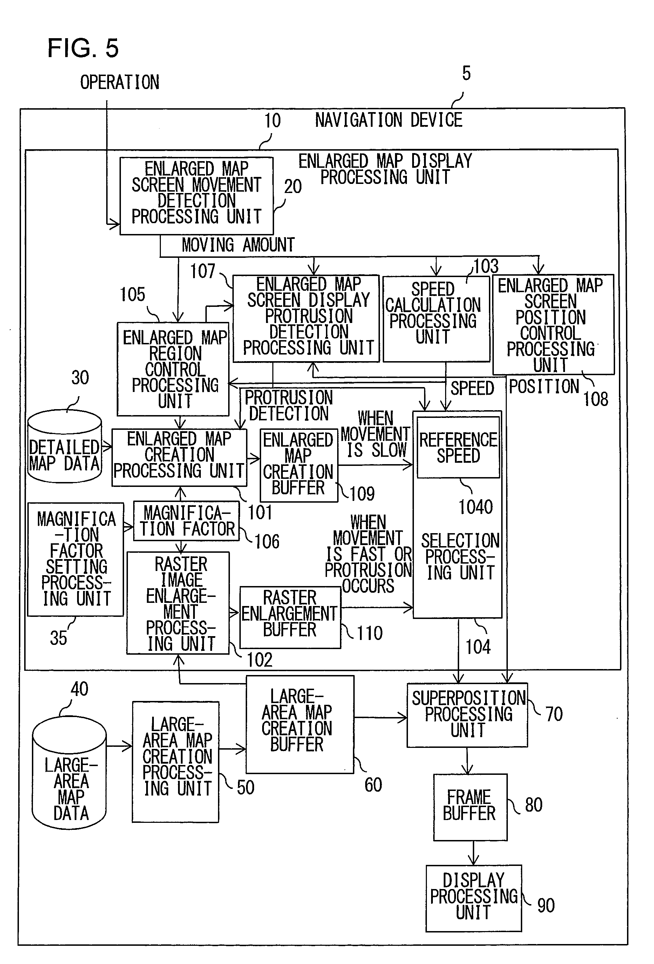

FIG. 5 presents a detailed configuration diagram illustrating functions of the enlarged map display processing unit 10. An enlarged map region control processing unit 105 controls correspondence between a position within the display screen and geographical coordinates. Geographical coordinates determine a geographical point uniquely, such as longitude and latitude or mesh number and XY coordinates in the mesh on a map. The enlarged map screen movement detection processing unit 20 outputs a start point of display of an enlarged map and an amount of movement of the enlarged map screen in terms of geographical coordinates. The amount of movement is obtained as follows. The movement of the finger 96 is detected in intervals of, for example, 1/30 seconds and the amount of movement of the finger 96 for 1/30 seconds is converted into geographical coordinates. This is calculated as follows. When a range of geographical coordinates displayed in the scale of the enlarged map created by the large-area map creation processing unit 50 is divided by the number of pixels of the display screen, a distance in geographical coordinates per pixel is obtained. The amount of movement can be obtained by multiplying the number of pixels over which the finger 96 has moved by the distance in geographical coordinates per pixel.

The enlarged map creation processing unit 101 creates an enlarged map by enlarging the enlarged map expressed in geographical coordinates output by the enlarged map region control processing unit 105, according to a magnification factor 106 set by the magnification factor setting processing unit 35, using the vector data of the detailed map data 30. The created data may be stored in an enlarged map creation buffer 109 as raster data. When a selection processing unit 104 selects the enlarged map data created by the enlarged map creation processing unit 101, the selection processing unit 104 may directly select the enlarged map data or the selection processing unit 104 may select the raster data stored in the creation buffer 109 as described later. In the following explanation, it is assumed that the enlarged map data created by the enlarged map creation processing unit 101 is stored in the enlarged map creation buffer 109 as raster data. Desirably, the size of the above enlarged map creation buffer 109 is greater than the display range of the slave screen 97 so as to include the display range of the above slave screen 97 and preferably corresponds to the amount of data of the enlarged map obtained by enlarging a predetermined region having a size not greater than the size of the display screen. When the moving speed of the slave screen 97 becomes no greater than a predetermined speed, the above enlarged map creation processing unit starts creation of an enlarged map, and therefore the movement of the slave screen 97 is continued while the creation processing is being continued. Therefore, the position in which the creation started is deviated from the position in which the movement of the slave screen 97 is stopped. It is necessary that an enlarged map including this range of deviation is created in the enlarged map creation buffer 109. However, if the enlarged map creation buffer 109 is too large, time for the creation processing becomes too long, so that there is a fear that the creation is not completed before the slave screen 97 is stopped.

An enlarged map screen display region protrusion detection processing unit 107 and an enlarged map screen position control processing unit 108 detects whether or not the region to be displayed by the slave screen 97 protrudes from the region of the enlarged map created in the enlarged map creation buffer 109 (i.e., the above predetermined region) when the display of the slave screen 97 is started or as a result of movement thereof.
This judgment of region is performed using geographical coordinates. That is, if the region after the slave screen 97 has moved (i.e., the region after a partial region of the large-area map has been altered) is included in the region of geographical coordinates created in the enlarged map creation buffer 109, it can be judged that there is "no" protrusion. If any protrusion is detected, the enlarged map creation processing unit 101 starts creation of an enlarged map of the relevant region. During the creation of it, the raster image enlargement processing unit 102 reads out raster data of the relevant region from the large-area map creation buffer 60 for enlargement processing and stores the resultant data in the raster enlargement buffer 110. The result is selected by the selection processing unit 104 and synthesized as the slave screen 97 with the large-area map screen 95 that shows a large-area map by the superposition processing unit 70. This state is as shown in FIG. 4(b). Thereafter, after the creation by the enlarged map creation processing unit 101 is completed, the selection processing unit 104 selects data in the enlarged map creation buffer 109 and outputs it to the superposition processing unit 70. This state is as shown in FIG. 4(c). While the slave screen 97 is moving, the speed calculation processing unit 103 divides a distance of movement per 1/30 seconds of the finger 96 by 1/30 seconds to obtain a moving speed of the slave screen 97. As a result, in case where the moving speed is faster than a reference speed 1040, the selection processing unit 104 selects the image in the raster enlargement buffer 110 (cf., the state of 97-1 in FIG. 2) and in a case other than that, the selection processing unit 104 selects the image in the enlarged map creation buffer 109 (cf., the state of 97-2 in FIG. 2), and outputs the selected image to the superposition processing unit 70.

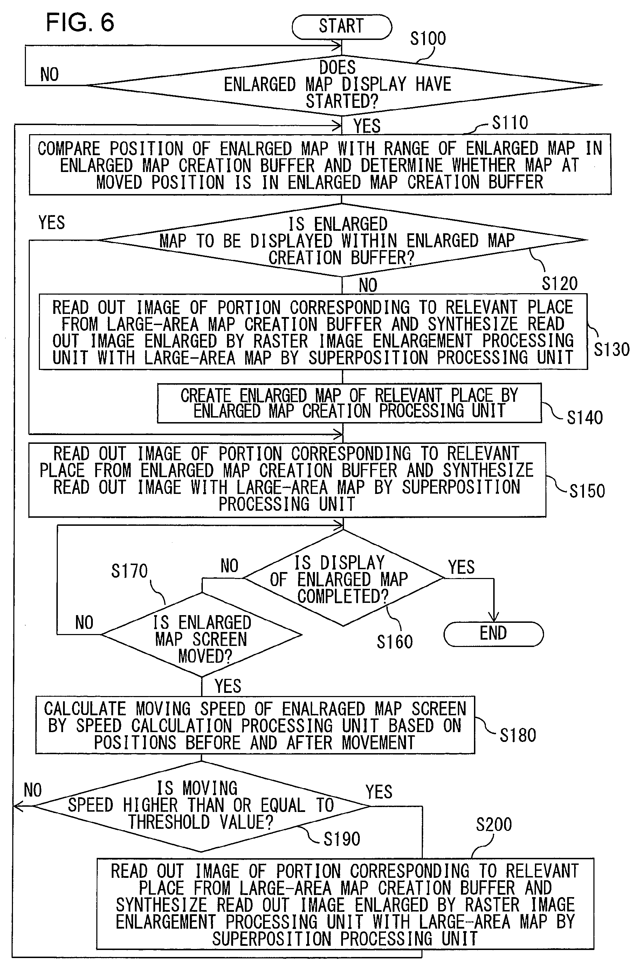

FIG. 6 presents a flow diagram illustrating the above operations. First, the operation button 98 marked "ENLARGED MAP ON" that is displayed on the large-area map screen 95 is pressed and start of display of the enlarged map is waited for (step S 100). Then, the position of the slave screen 97 is compared with the range of the enlarged map in the enlarged map creation buffer 109 and whether or not a partial enlarged map obtained by enlarging a partial region of the large-area map and shown by the moved slave screen (i.e., enlarged map screen) 97 is included within the region of the enlarged map created in the enlarged map creation buffer 109 (i.e., predetermined region) is judged by the enlarged map screen display region protrusion detection processing unit 107 and the enlarged map screen position control processing unit 108 (step S 110). As a result, when it is detected that a partial enlarged map to be displayed (i.e., partial enlarged map in which a partial region after alteration is enlarged) is included within the region of the enlarged map (i.e., predetermined region) in the enlarged map creation buffer (cf., "YES" in step S120), control proceeds to step S150. The image of the partial enlarged map that is obtained by enlarging the partial region after alteration is read out from the enlarged map creation buffer 109 (i.e., selected) by the selection unit 104, and synthesized with the large-area map by the superposition processing unit 70 (step S150). When it is detected that the partial enlarged map obtained by enlarging the partial region after alteration is not included in the above predetermined region (cf., "NO" in step S120), the image of the portion of relevant place (the partial region after alteration) in the large-area map is read out from the large-area map creation buffer 60 and the image enlarged by the raster image enlargement processing unit 102 is selected by the selection processing unit 104 and is defined as a partial enlarged image. The partial enlarged image is superposed on the large-area map by the superposition processing unit 70 so as to perform synthesis processing (step S130). That is, the enlarged map screen is displayed in superposition on the large-area map screen. In parallel with this processing, another enlarged map obtained by enlarging another predetermined region including relevant place (i.e., the partial region after alteration) is created by the enlarged map creation processing unit 101 (step S 140).

After completion of the above creation, raster data of the image of the partial map of relevant place (i.e., the other enlarged map above) is read out from the enlarged map creation buffer 109 (selected) by the selection unit 104. The enlarged map obtained by reading out the raster data is superposed on the large-area map by the superposition processing unit 70 to be synthesized with the large-area map (step S150). This state corresponds to the display shown in FIG. 4(c). That is, the enlarged map screen (i.e., slave screen 97) is displayed in superposition on the large-area map screen 95. Thereafter, it is judged whether or not the operation of completion of display of the slave screen 97 is performed by operation of the operation button 98 (step S160). In case of "NO", it is judged whether or not the slave screen 97 is moved (step S170). This judgment is performed for every 1/30 seconds. If any movement of the slave screen is detected, the speed calculation processing unit 103 calculates the moving speed of the enlarged map screen based on the respective positions before and after the movement thereof (step S 180). As a result, it is judged whether or not the above moving speed is no lower than a threshold value, which is the reference speed 1040 (step S 190). If the moving speed is no lower than the threshold value (i.e., no lower than the reference speed 1040), the image of the partial map of relevant place is read out from the large-area map creation buffer 60 and enlarged by the raster image enlargement processing unit 102 to obtain an enlarged image, which image is synthesized with the large-area map by the superposition processing unit 70 (i.e., the enlarged map screen is superposed on the large-area map screen) (step S200) and control returns to step S110. On the other hand, if the moving speed is lower than the threshold value (i.e., lower than the reference speed 1040), control returns to step S110 straightforwardly.

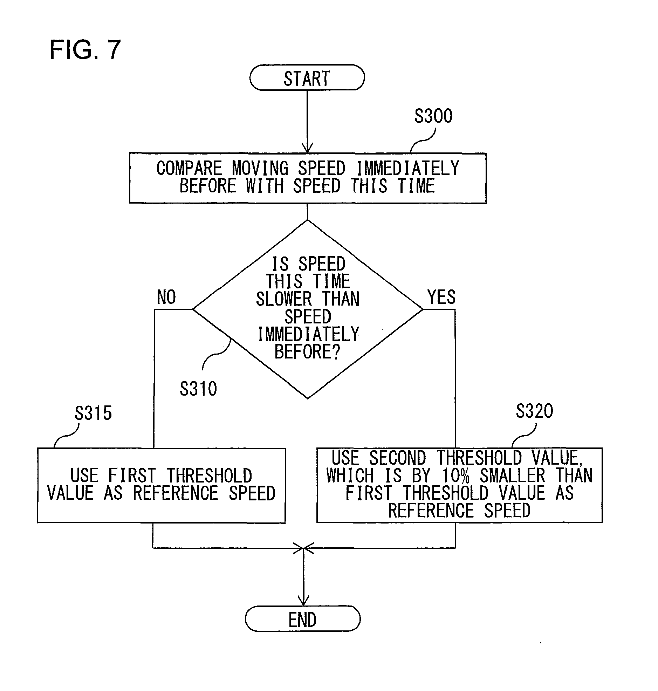

FIG. 7 presents a flow diagram illustrating a method of changing the reference speed 1040 in case where the moving speed of the slave screen 97 is altered from high speed to low speed and in case where the moving speed of the slave screen 97 is altered from low speed to high speed. When the slave screen 97 moves at a speed around the reference speed 1040, it is supposed that speeds over and under this threshold value are repeatedly obtained frequently. In such a case, the slave screen 97 displays thereon the image in the raster enlargement buffer 110 (cf., 97-1 in FIG. 2) and the image in the enlarged map creation buffer 109 (cf., 97-2 in FIG. 2) alternately in a repeated manner. This causes the display screen to blink, providing a display which is hard to see. Thus, different threshold values are used, i.e., a first threshold value which is used when the moving speed of the slave screen 97 is altered from below to above (exceeding) the reference speed 1040 and a second threshold value which is used when the moving speed of the slave screen 97 alters from above to below (falling below) the reference speed 1040 to prevent blinking of the display screen from occurring. This processing illustrated in FIG.7 is performed right before the step S 190 shown in FIG.6. Firstly, the moving speed this time and the moving speed immediately before this time (1/30 seconds before) are compared. In case where the moving speed this time is not slower than the moving speed immediately before (step S315), the first threshold value is defined as the reference speed 1040 (step S320). On the other hand, in case where the moving speed this time is slower than the moving speed immediately before (step S310), the second threshold value, which is by about 10% smaller than the first threshold value, is defined as the reference speed 1040 (step S320).

The navigation device 5 according to the present embodiment includes a display processing unit 90 that displays on a display screen thereof a large-area map screen 95 that shows a large-area map, and also a slave screen (enlarged map screen) 97 that displays a map obtained by enlarging a partial region of the large-area map at a display position of the partial region in superposition on the large-area map screen 95; a speed calculation processing unit 103 that calculates a moving speed of the enlarged map screen 95; an enlarged map creation processing unit 101 that creates an enlarged map obtained by enlarging a predetermined region including the above partial region based on the detailed map data 30 obtained by enlarging the large-area map; and a selection processing unit 104 that selects a map based on raster data of the partial region as a map that is to be displayed by the slave screen 97 when the moving speed is no lower than the reference speed 1040, and that selects a map based on raster data of a region of the above enlarged map, corresponding to the above partial region, as a map that is to be displayed by the slave screen 97 when the moving speed is lower than the reference speed 1040. Therefore, the slave screen 97 can be moved freely and at high speed to a desired position within a predetermined region within the large-area map screen 95.

It is preferred that the navigation device 5 according to the present embodiment further includes an enlarged map screen display region protrusion detection processing unit 107 and an enlarged map screen position control processing unit 108 that detect that the above partial region after the movement of the slave screen 97 is not included in the above predetermined region. In case where the moving speed of the slave screen 97 is lower than the reference speed 1040 and it is detected by the enlarged map screen display region protrusion detection processing unit 107 and the enlarged map screen position control processing unit 108 that the above partial region is not included in the above predetermined region, the selection processing unit 104 selects the map based on the raster data of the above partial region as the map to be displayed by the slave screen 97 until the enlarged map creation processing unit 101 creates another enlarged map obtained by enlarging another predetermined region including the above partial region that has been altered. Therefore, the slave screen 97 can be moved freely and at high speed to a desired position within the large-area map screen 95.

It is preferred that in the navigation device 5 according to the present embodiment, the reference speed 1040 is the first threshold value when the moving speed becomes higher than the reference speed 1040 while the reference speed 1040 is the second threshold value, which is smaller than the first threshold value when the moving speed becomes lower than the reference speed 1040. With this configuration, the display of the slave screen is performed so as to prevent the image in the raster enlargement buffer 110 (cf., 97-1 in FIG. 2) and the image in the enlarged map creation buffer 109 (cf., 97-2 in FIG. 2) from being alternately displayed in a repeated manner and thus to prevent the display screen from becoming difficult to be seen.

It is preferred that the navigation device 5 according to the present embodiment further includes an enlarged map screen movement detection processing unit 20 that detects the movement of the slave screen 97 when the user contacts the slave screen 97 and alters the contact position within the large-area map screen 95. The moving speed calculated by the speed calculation processing unit 103 is the moving speed of the slave screen 97 when the movement of the slave screen 97 is detected by the enlarged map screen movement detection processing unit 20. Therefore, the slave screen 97 can be moved freely and at high speed to a desired position within the large-area map screen 95.

### --- VARIATION EXAMPLES ---

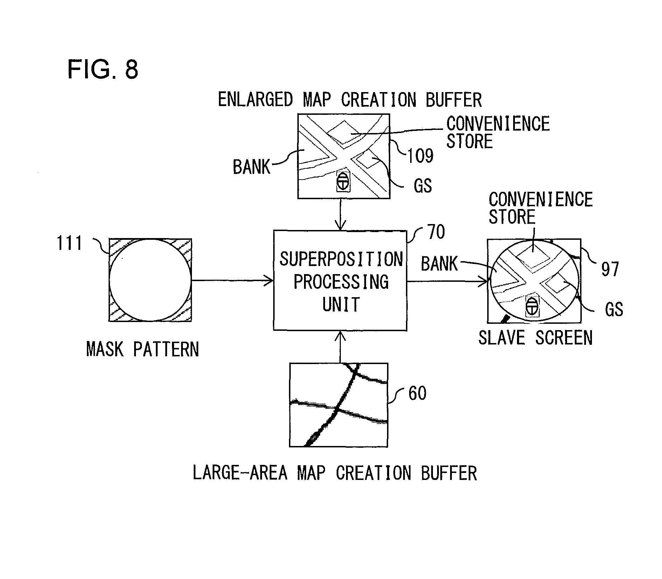

(1) FIG. 8 presents a diagram illustrating a method of displaying the slave screen 97 in a desired form instead of a rectangular shape. The superposition processing unit 70 extracts and displays the content in the enlarged map creation buffer 109 according to a bit pattern recorded in a mask pattern 111. With this variation example, for example, it is assumed that the shape of shaded area with hatched lines of the mask pattern 111 is expressed by 1 and the inside of a circle is expressed by 0. Then, in the portion expressed by 1, data in the large-area map creation buffer 60 is selected and in the portion expressed by 0, data in the enlarged map creation buffer 109 is selected. The selected one is displayed as the slave screen 97.

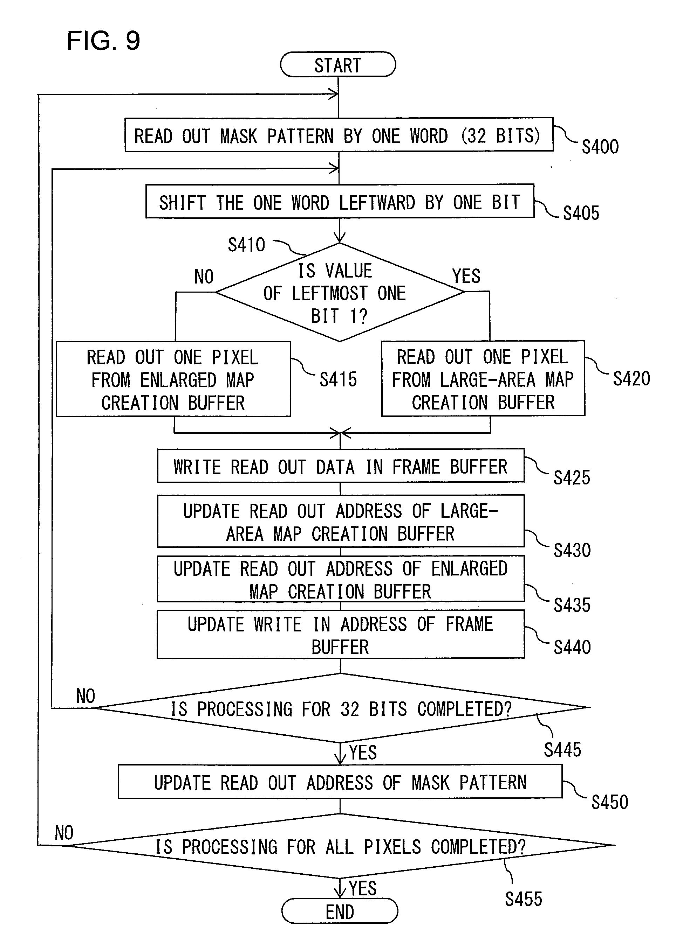

   FIG. 9 presents a flow diagram illustrating the processing shown in FIG. 8. First, one word (here, 32 bits are supposed) is read out from the mask pattern 111 (step S400). Since the mask pattern 111 contains one bit per pixel, data for 32 pixels is read out by the above process. Then, the data read out from the mask pattern 111 is shifted by one bit leftward (step S405). As a result the leftmost one bit is put out as a carry bit and it is possible to determine whether that bit is 1 or 0 (step S410). As a result, if that bit is 0, one pixel to be displayed is read out from the enlarged map creation buffer 109 (step S415), or if that bit is 1, one pixel to be displayed is read out from the large-area map creation buffer 60 (step S420). Then, the read out data is written into a region of the enlarged map 107 within a frame buffer 80 (step S425). Thereafter, the read out address of the large-area map creation buffer 60 is updated (step S430), the read out address of the enlarged map creation buffer 109 is updated (step S435), and the write in address of the frame buffer 80 is updated (step S440). After all the shift processing for one word of the mask pattern 111 is completed (step S445), the read out address of the mask pattern 111 is updated (step S450). The above processing is repeated until processing for all the pixels is completed (step S455). If the selection processing unit 104 has selected the raster enlargement buffer 110, an enlargement buffer 110 is used instead of the enlarged map creation buffer 109 in steps S415 and S435 in FIG. 9. In this method, the shape of the slave screen 97 can be altered freely by altering the pattern shape of the mask pattern 111.
   In the navigation device 5 according to the variation example (1) above, a shape of the slave screen 97 is not limited to a rectangular shape and may be any desired shape.

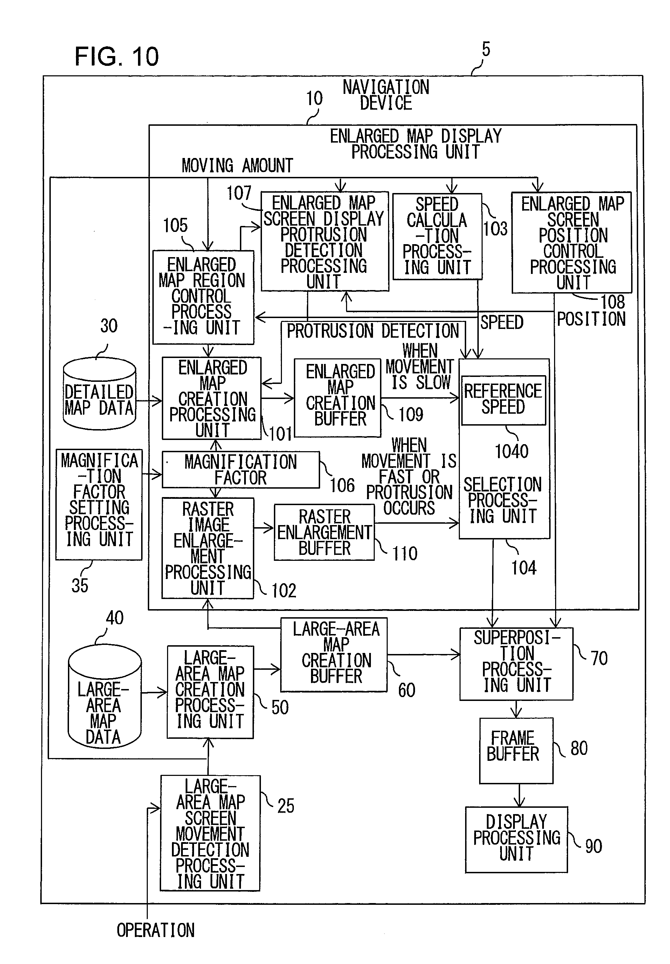

(2) FIG. 10 presents a configuration diagram illustrating functions of processing of the slave screen 97 when a large-area map as a background or substratum is being scrolled. In this case too, one of the data in the enlarged map creation buffer 109 and the data in the large-area map creation buffer 60 in the display of the slave screen 97 is switched to the other of the data in the enlarged map creation buffer 109 and the data in the large-area map creation buffer 60 depending on a difference in speed of scrolling the large-area map. With this configuration, an enlarged map can be displayed even when the large-area map is being scrolled at high speed. The configuration of FIG. 10 is made up by replacing the enlarged map screen movement detection processing unit 20 in FIG. 5 by the large-area map screen movement detection processing unit 25. When an operation is performed to scroll the large-area map, the large-area map screen movement detection processing unit 25 creates a map that is obtained by moving by a distance in which the large-area map is scrolled in the large-area map creation processing unit 50. The method of scrolling the large-area map may be a method in which a finger that touches the large-area map screen is moved, with the finger being kept in contact therewith.

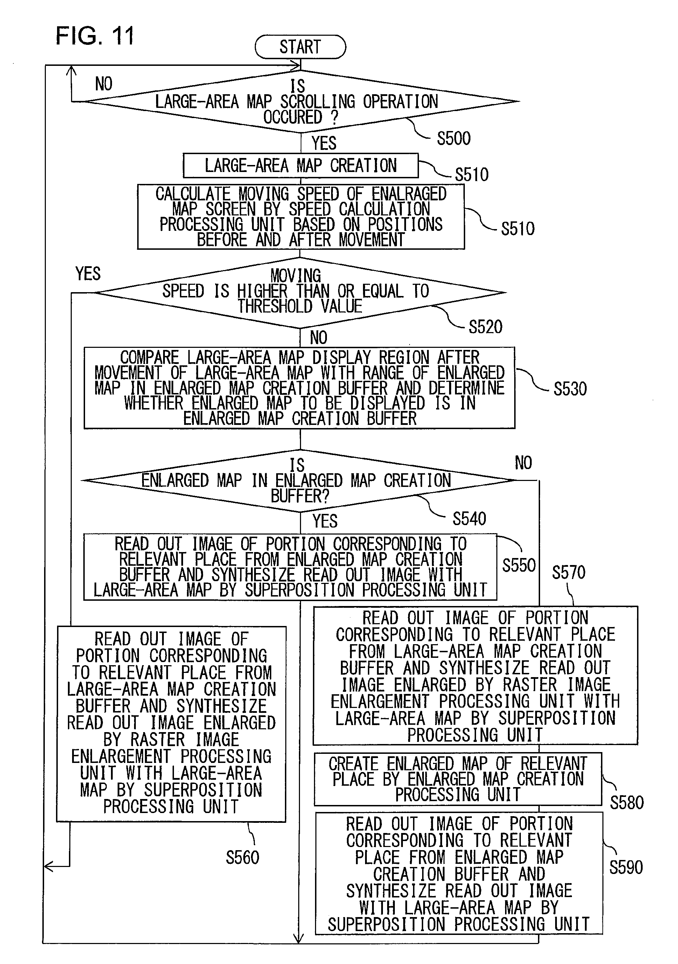

FIG. 11 presents a flow diagram illustrating the configuration of FIG. 10. Whether or not the scrolling operation for the large-area map has been occurred is determined at intervals of, for example, 1/30 seconds (step S500). If the scrolling operation has been occurred, a large-area map is created such that the display position is shifted as much as the finger has moved and the result is stored in the large-area map creation buffer 60. On this occasion, the portion of the image before the scrolling that is displayed even after the scrolling is copied after shifting by an amount in which the image is scrolled in the large-area map creation buffer 60 and a deficit is added. By creating the image in this manner, processing time can be shortened as compared with creating the whole image. Therefore, since the smaller the amount of movement by scrolling, the smaller the amount of addition, so that it is possible to perform the processing at high speed. On the contrary, the larger the amount of movement by scrolling (high speed scrolling), the longer the creation processing time is. For this reason, it is necessary to reduce the whole processing load by reducing creation processing of the slave screen at the high speed scrolling.

Movement of the large-area map displayed on the large-area map screen 95 by scrolling causes the large-area map screen to be altered. Although the position of the enlarged map screen (i.e., slave screen 97) that is displayed in the large-area map screen is not altered, a partial region of the large-area map that is enlarged in the partial enlarged map shown on the enlarged map screen is altered according to the movement of the large-area map due to the alteration of the large-area map screen. In this case, the amount of the large-area map screen corresponds to the amount of scroll and the moving speed of the enlarged map screen corresponds to the speed of scroll.

Then, the moving speed of the enlarged screen is calculated by speed calculation processing unit 103 based on the positions before and after movement of the large-area map (step S510). It is determined whether or not the above speed is no lower than the value of the reference speed 1040 (i.e., threshold value) (step S520). If the moving speed is no lower than the threshold value (i.e., no lower than the reference speed 1040), an image of a partial map of the place is read out from the large-area map creation buffer 60 and is enlarged by the raster image enlargement processing unit 102. The enlarged image is synthesized with the large-area map by the superposition processing unit 70 (i.e., the enlarged map screen is superposed on the large-area screen). By so doing, while the large-area map is being scrolled at high speed, vector map creation processing can be eliminated, so that the entire processing load can be reduced.

On the other hand, when the scroll speed is lower than the threshold value, it is determined whether or not the partial enlarged map to be displayed on the slave screen (i.e., the partial enlarged map obtained by enlarging a part of region after the alteration) is included in the region of the enlarged map created in the enlarged map creation buffer 109 (i.e., predetermined region) (steps S530 and S540). If included, an image of the partial enlarged map obtained by enlarging a part of the region after the alteration is read out (i.e., selected) from the enlarged map creation buffer 109 by the selection processing unit 104. The image of the partial enlarged map is superposed on the large-area map by the superposition processing unit 70 to perform synthesis processing (step S550). That is, the enlarged map screen is displayed as superposed on the large-area map screen. If not included, an image of the portion of relevant place in the large-area map (i.e., the partial region after the alteration) is read out from the large-area map creation buffer 60. The read out image is enlarged by raster image enlargement processing unit 102. The enlarged image is selected by the selection processing unit 104. This is used as the partial enlarged image. The partial enlarged image is superposed on the large-area map by the superposition processing unit 70 to be synthesized with the large-area map (step S570). Along with this processing, another enlarged map (i.e., another detailed map) obtained by enlarging another predetermined region including the relevant place (i.e., the partial region after the alteration) is created by the enlarged map creation processing unit 101 (step S580). After completion of the above creation processing, raster data of the image of the partial map of the relevant place (i.e., the above another detailed map) is read out from the enlarged map creation buffer 109 and the detailed map of which the raster data has been read out is superposed on the large-area map by the superposition processing unit 70 to be synthesized with the large-area map.

Preferably, the navigation device 5 according to Variation Example (2) further includes a large-area map screen movement detection processing unit 25 that detects that the large-area map displayed on the large-area map screen 95 has been moved by scrolling it, in addition to the construction of the navigation device 5 according to the above embodiment. The movement of the slave screen 97 is performed by alteration of the above partial region in accordance with the movement of the large-area map by scrolling it and the speed calculation processing unit 103 calculates a scrolling speed upon the scrolling. Therefore, the slave screen 97 can be moved freely and at high speed to a desired position in the large-area map screen 95.

As described above, according to the present invention, it is possible to display an enlarged map in both cases while the enlarged map is moving at high speed and while the large-area map is being scrolled at high speed.

### REFERENCE SIGNS LIST

5 navigation device
10 enlarged map display processing unit
20 enlarged map screen movement detection processing unit
25 large-area map screen movement detection processing unit
30 detailed map data
35 magnification factor setting processing unit
40 large-area map data
50 large-area map creation processing unit
60 large-area map creation buffer
70 superposition processing unit
80 frame buffer
90 display processing unit
95 large-area map screen
97 slave screen
101 enlarged map creation processing unit
102 raster image enlargement processing unit
103 speed calculation processing unit
104 selection processing unit
105 enlarged map region control processing unit
106 magnification factor
107 enlarged map screen display region protrusion detection processing unit
108 enlarged map screen position control processing unit
109 enlarged map creation buffer
110 raster enlargement buffer
111 mask pattern
1040 reference speed

## Claims

1. A navigation device, comprising:
a map display means for displaying a large-area map screen showing a large-area map and displaying an enlarged map screen showing a partial enlarged map obtained by enlarging a partial region of the large-area map in superposition on the large-area map screen at a display position of the partial region;
a speed calculation means for calculating a speed pertaining to movement of the enlarged map screen;
an enlarged map creation means for creating an enlarged map obtained by enlarging a predetermined region including the partial region of the large-area map based on vector data of a detailed map obtained by enlarging the large-area map; and
a selection means for selecting the partial region of the large-area map as the partial enlarged map when the speed pertaining to the movement is no lower than a reference speed and selecting a region of the enlarged map, corresponding to the partial region, as the partial enlarged map when the speed pertaining to the movement is lower than the reference speed.

2. A navigation device according to claim 1, further comprising:
a protrusion detection means for detecting that the partial region after the movement of the large-area map screen is not included in the predetermined region, wherein
when the speed pertaining to the movement is lower than the reference speed and the protrusion detection means detects that the partial region is not included in the predetermined region, until the enlarged map creation means creates another enlarged map obtained by enlarging another predetermined region including the partial region altered, the selection means selects the partial region altered of the large-area map as the partial enlarged map.

3. A navigation device according to claim 1 or 2, wherein
the reference speed is a first threshold value when the speed pertaining to the movement becomes higher than the reference speed; and
the reference speed is a second threshold value that is smaller than the first threshold value when the speed pertaining to the movement becomes lower than the reference speed.

4. A navigation device according to any one of claims 1 through 3, further comprising:
an enlarged map screen movement detection means for detecting the movement of the enlarged map screen when a user contacts the enlarged map screen and alters a contact position within the large-area map screen, wherein
the speed pertaining to the movement calculated by the speed calculation means is a moving speed of the enlarged map screen when the movement of the enlarged map screen is detected by the enlarged map screen movement detection means.

5. A navigation device according to claim 1 or 2, further comprising:
a large-area map screen movement detection means for detecting that the enlarged area map shown by the large-area map screen has been moved by scrolling the large-area map screen, wherein
the movement of the enlarged map screen is performed by alteration of the partial region in accordance with the movement of the large-area map by the scrolling and the speed pertaining to the movement calculated by the speed calculation means is a scroll speed upon the scrolling.
